# EUROPÄISCHE PATENTSCHRIFT

(11) **EP 3 532 983 B1**
(45) Veröffentlichungstag und Bekanntmachung des Hinweises auf die Patenterteilung: **04.03.2026**
(21) Anmeldenummer: 17768671.4
(22) Anmeldetag: 01.09.2017
(51) Int. Cl.: G06V 20/58, B60R 1/27, G03B 37/04

(54) **VERFAHREN UND VORRICHTUNG ZUM ERZEUGEN EINER FAHRZEUGUMGEBUNGSANSICHT**
METHOD AND DEVICE FOR PRODUCING A VIEW OF THE SURROUNDINGS OF A VEHICLE
PROCÉDÉ ET DISPOSITIF POUR CRÉER UNE VUE DE L'ENVIRONNEMENT D'UN VÉHICULE

(30) Priorität: 25.10.2016 DE 102016220894
(43) Veröffentlichungstag der Anmeldung: 04.09.2019
(73) Patentinhaber: AUMOVIO Autonomous Mobility Germany GmbH, 85057 Ingolstadt (DE)
(72) Erfinder: MILZ, Stefan, 07929 Sallburg-Ebersdorf (DE); SIMON, Martin, 98593 Floh-Seligental (DE); FRIEBE, Markus, 95482 Gefrees (DE); SCHREPFER, Jörg, 96355 Tettau (DE); PETZOLD, Johannes, 95326 Kulmbach (DE); KHONGSAB, Peerayut, DE-90411 Nürnberg (DE)
(74) Vertreter: Aumovio Corporation
(86) Internationale Anmeldenummer: PCT/DE2017/200087
(87) Internationale Veröffentlichungsnummer: WO 2018/077353

(56) Entgegenhaltungen:
- DE-A1- 102014 107 156
- DE-A1- 102014 208 664
- US-A1- 2014 232 869
- US-A1- 2016 191 795

## Beschreibung

Die Erfindung betrifft ein Verfahren zum Erzeugen einer Fahrzeugumgebungsansicht bei einem Fahrzeug, insbesondere bei einem Straßenfahrzeug.

Fahrzeuge sind zunehmend mit Fahrerassistenzsystemen ausgestattet, die Bilddaten auswerten, um Fahrerassistenzfunktionen einem Fahrer eines Fahrzeuges bereitzustellen. Hierzu können an einer Fahrzeugkarosserie bzw. einem Fahrzeugrumpf eines Fahrzeuges an verschiedenen Seiten Fahrzeugkameras vorgesehen sein, die Bilddaten bzw. Kamerabilder der Fahrzeugumgebung an eine Datenverarbeitungseinheit des Fahrerassistenzsystems liefern. Die Bilddatenverarbeitungseinheit des Fahrerassistenzsystems kann basierend auf den empfangenen Bilddaten eine Fahrzeugumgebungsansicht der Fahrzeugumgebung des Fahrzeuges berechnen. Die berechnete Fahrzeugumgebungsansicht wird über eine Anzeigeeinheit an einen Fahrer des Fahrzeuges ausgegeben, um ihn bei der Durchführung von Fahrzeugmanövern zu unterstützen. Beispielsweise liefert ein herkömmliches Fahrerassistenzsystem Unterstützung bei der Durchführung von Parkmanövern bei einem Straßenfahrzeug.

Durch das Vorhandensein von Objekten bzw. Hindernissen in der unmittelbaren Fahrzeugumgebung des Fahrzeuges werden allerdings die von den Fahrzeugkameras gelieferten Bilddaten beeinträchtigt, da derartige Objekte bzw. Hindernisse Schattenflächen erzeugen, **d.h.** Bereiche, die für die Fahrzeugkameras des Fahrerassistenzsystems nicht sichtbar sind. Beispielsweise kann ein Betonpfosten als Objekt bzw. Hindernis dazu führen, dass verschiedene Fahrzeugkameras gewisse Bereiche innerhalb der unmittelbaren Fahrzeugumgebung nicht erfassen können. Durch die von einem Objekt bzw. Hindernis erzeugten Schattenflächen wird die Qualität einer auf Basis der gelieferten Kamerabilder berechneten Fahrzeugumgebungsansicht vermindert bzw. geschmälert. Weiterhin können von der berechneten Fahrzeugumgebungsansicht abgeleitete Funktionen des Fahrerassistenzsystems beeinträchtigt werden. Beispielsweise kann eine Projektionsfläche durch Objekte bzw. Hindernisse in der Fahrzeugumgebung deformiert bzw. verzerrt werden.

US 2014/0232869 A1 bezieht sich auf ein Bildverarbeitungssystem für ein Fahrzeug mit einer angebrachten Kamera an dem Fahrzeug mit einem Bildsensor und einer Linse.

US 2016/0191795 A1 bezieht sich auf ein Verfahren und System zum Darstellen einer Panorama-Surround-Ansicht in einem Fahrzeug.

DE 10 2014 107 156 A1 bezieht sich auf ein Verfahren zum Erzeugen einer verbesserten perspektivischen Ansicht eines Bereichs in Front eines Fahrzeugs, unter Verwendung von Bildern von linksfrontseitigen und rechtsfrontseitigen Kameras.

DE 10 2014 208 664 A1 bezieht sich auf ein Kamera-Surround-View-System für ein Fahrzeug mit einer Fahrzeugkamera die Kamerabilder liefert, welche durch ein Datenverarbeitungseinheit zur Erzeugung eines Umgebungsbildes verarbeitet werden.

Es ist daher eine Aufgabe der vorliegenden Erfindung, ein Verfahren und eine Vorrichtung zum Erzeugen einer Fahrzeugumgebungsansicht zu schaffen, bei der die Qualität der Fahrzeugumgebungsansicht bei Vorhandensein von Objekten bzw. Hindernissen in der Fahrzeugumgebung verbessert wird.

Diese Aufgabe wird erfindungsgemäß durch ein Verfahren zum Erzeugen einer Fahrzeugumgebungsansicht bei einem Fahrzeug mit den in Patentanspruch 1 angegebenen Merkmalen gelöst.

Die Erfindung schafft demnach ein Verfahren zum Erzeugen einer Fahrzeugumgebungsansicht bei einem Fahrzeug mit den Schritten:
Liefern von Bilddaten einer Fahrzeugumgebung des Fahrzeuges durch Fahrzeugkameras, die an einer Fahrzeugkarosserie des Fahrzeuges vorgesehen sind,
Erkennen von Bildbereichen der Fahrzeugumgebung, die aus Sicht von Fahrzeugkameras durch ein in der Fahrzeugumgebung befindliches Objekt verdeckt werden,
Ersetzen von Bildanteilen eines von dem Objekt verdeckten Bildbereichs, die für mindestens eine andere Fahrzeugkamera sichtbar sind, durch Bilddaten, welche von der anderen Fahrzeugkamera geliefert werden, und
Ersetzen von Bildanteilen des von dem Objekt verdeckten Bildbereichs, die für keine der anderen Fahrzeugkameras sichtbar sind, durch extrapolierte Bilddaten, die auf Basis von Bilddaten in der Objektumgebung des Objektes extrapoliert werden, welche von den anderen Fahrzeugkameras geliefert werden.

Bei einer möglichen Ausführungsform des erfindungsgemäßen Verfahrens werden die extrapolierten Bilddaten durch örtliche Extrapolation auf Basis von Bilddaten berechnet, welche von den anderen Fahrzeugkameras geliefert werden.

Bei einer weiteren möglichen alternativen Ausführungsform des erfindungsgemäßen Verfahrens werden die extrapolierten Bilddaten durch zeitliche Extrapolation auf Basis von Bilddaten berechnet, welche von den anderen Fahrzeugkameras geliefert werden.

Bei einer weiteren möglichen alternativen Ausführungsform des erfindungsgemäßen Verfahrens werden die extrapolierten Bilddaten durch frequenzselektive Extrapolation auf Basis von Bilddaten berechnet, welche von den anderen Fahrzeugkameras geliefert werden.

Erfindungsgemäß wird eine 3D-Projektionsfläche zur Projektion der Fahrzeugumgebungsansicht in Abhängigkeit von dem durch das Objekt verdeckten Bildbereich adaptiv angepasst.

Bei einer weiteren möglichen Ausführungsform des erfindungsgemäßen Verfahrens wird die Fahrzeugumgebungsansicht durch eine Berechnungseinheit in Echtzeit berechnet, die Bilddaten von den Fahrzeugkameras des Fahrzeuges erhält.

Die Erfindung schafft ferner gemäß einem weiteren zweiten Aspekt eine Vorrichtung zur Erzeugung einer Fahrzeugumgebungsansicht bei einem Fahrzeug mit
Fahrzeugkameras, die an einer Fahrzeugkarosserie eines Fahrzeuges vorgesehen sind und Bilddaten einer Fahrzeugumgebung des Fahrzeuges liefern und mit
einer Bilddatenverarbeitungseinheit, die Bildbereiche der Fahrzeugumgebung erkennt, welche aus Sicht von Fahrzeugkameras durch ein in der Fahrzeugumgebung befindliches Objekt verdeckt werden,
wobei die Bilddatenverarbeitungseinheit Bilddatenanteile eines von dem Objekt verdeckten Bildbereichs, die für mindestens eine andere Fahrzeugkamera sichtbar sind, durch Bilddaten, welche von der anderen Fahrzeugkamera geliefert werden, ersetzt und wobei die Bilddatenverarbeitungseinheit Bildanteile des von dem Objekt verdeckten Bildbereichs, die für keine der anderen Fahrzeugkameras sichtbar sind, durch extrapolierte Bilddaten ersetzt, die auf Basis von Bilddaten in der Objektumgebung des Objektes extrapoliert werden, welche von den anderen Fahrzeugkameras geliefert werden.

Bei einer möglichen Ausführungsform der erfindungsgemäßen Vorrichtung werden die extrapolierten Bilddaten durch die Bilddatenverarbeitungseinheit durch örtliche Extrapolation auf Basis von Bilddaten berechnet, welche von den anderen Fahrzeugkameras geliefert werden.

Bei einer weiteren möglichen alternativen Ausführungsform werden die extrapolierten Bilddaten durch die Bilddatenverarbeitungseinheit durch zeitliche Extrapolation auf Basis von Bilddaten berechnet, welche von den anderen Fahrzeugkameras geliefert werden.

Bei einer weiteren möglichen alternativen Ausführungsform werden die extrapolierten Bilddaten durch die Bilddatenverarbeitungseinheit durch frequenzselektive Extrapolation auf Basis von Bilddaten berechnet, welche von den anderen Fahrzeugkameras geliefert werden.

Erfindungsgemäß wird durch die Bilddatenverarbeitungseinheit eine 3D-Projektionsfläche zur Projektion der Fahrzeugumgebungsansicht in Abhängigkeit von dem durch das Objekt verdeckten Bildbereich adaptiv angepasst.

Bei einer weiteren möglichen Ausführungsform der erfindungsgemäßen Vorrichtung wird die Fahrzeugumgebungsansicht durch die Bilddatenverarbeitungseinheit in Echtzeit berechnet, indem Bilddaten ausgewertet werden, welche von den Fahrzeugkameras des Fahrzeuges stammen.

Die Erfindung schafft ferner gemäß einem weiteren Aspekt ein Fahrerassistenzsystem mit einer Vorrichtung zur Erzeugung einer Fahrzeugumgebungsansicht des Fahrzeuges gemäß dem zweiten Aspekt der Erfindung.

Die Erfindung schafft gemäß einem weiteren Aspekt ein Fahrzeug mit einem derartigen Fahrerassistenzsystem.

Im Weiteren werden mögliche Ausführungsformen der verschiedenen Aspekte der Erfindung unter Bezugnahme auf die beigefügten Figuren detailliert beschrieben.

Es zeigen:
- Figur 1: ein Ablaufdiagramm zur Darstellung eines Ausführungsbeispiels eines erfindungsgemäßen Verfahrens zum Erzeugen einer Fahrzeugumgebungsansicht bei einem Fahrzeug;
- Figur 2: eine schematische Darstellung zur Erläuterung der Funktionsweise des erfindungsgemäßen Verfahren und einer erfindungsgemäßen Vorrichtung zum Erzeugen einer Fahrzeugumgebungsansicht bei einem Fahrzeug.

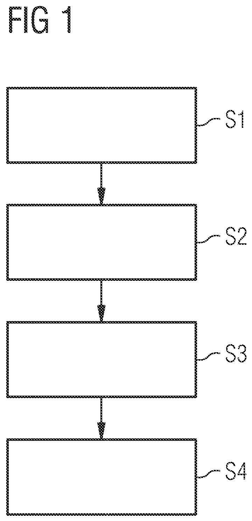

Wie man aus Figur 1 erkennen kann, umfasst das erfindungsgemäße Verfahren zum Erzeugen einer Fahrzeugumgebungsansicht bei dem dargestellten Ausführungsbeispiel mehrere Schritte.

In einem ersten Schritt S1 werden Bilddaten einer Fahrzeugumgebung des Fahrzeuges durch Fahrzeugkameras geliefert, die an einer Fahrzeugkarosserie des Fahrzeuges vorgesehen sind.

In einem weiteren Schritt S2 werden Bildbereiche der Fahrzeugumgebung erkannt, die aus Sicht von Fahrzeugkameras durch ein in der Fahrzeugumgebung befindliches Objekt verdeckt werden. Dieses Objekt ist beispielsweise ein Hindernis, welches sich in der unmittelbaren Fahrzeugumgebung des Fahrzeuges befindet, beispielsweise ein Pfosten oder dergleichen. Das Objekt bzw. das Hindernis führt zu Schattenflächen bzw. Bereichen, die von den Fahrzeugkameras nicht erfasst werden können. Die Fahrzeugkameras befinden sich vorzugsweise an verschiedenen Seiten der Fahrzeugkarosserie.

In einem weiteren Schritt S3 werden Bildanteile eines von dem Objekt verdeckten Bildbereichs, die für mindestens eine andere Fahrzeugkamera sichtbar sind, durch Bilddaten ersetzt, welche von der anderen Fahrzeugkamera geliefert werden. Weiterhin werden im Schritt S4 Bildanteile des von dem Objekt verdeckten Bildbereichs, die für keine der anderen Fahrzeugkameras sichtbar sind, durch extrapolierte Bilddaten ersetzt. Dabei werden die extrapolierten Bilddaten auf Basis von Bilddaten in der Objektumgebung des Objektes bzw. Hindernisses extrapoliert, welche von den anderen Fahrzeugkameras geliefert werden. Die extrapolierten Bilddaten werden vorzugsweise durch örtliche, zeitliche und/oder frequenzselektive Extrapolation auf Basis von Bilddaten durch eine Bilddatenverarbeitungseinheit berechnet, welche Bilddaten von den anderen Fahrzeugkameras erhält. Die Erkennung von Bildbereichen der Fahrzeugumgebung, die aus Sicht der Fahrzeugkameras durch ein anderes in der Fahrzeugumgebung befindliches Objekt verdeckt werden, erfolgt vorzugsweise im Schritt S2 in Echtzeit. Auch die Ersetzung von Bildanteilen im Schritt S3, S4 erfolgt vorzugsweise auf Basis der Bilddaten durch eine Bilddatenverarbeitungseinheit in Echtzeit. Bei einer erfindungsgemäßen Ausführungsform des in Figur 1 dargestellten Verfahrens wird eine Projektionsfläche zur Projektion der Fahrzeugumgebungsansicht in Abhängigkeit von dem durch das Objekt bzw. Hindernis verdeckten Bildbereich adaptiv angepasst.

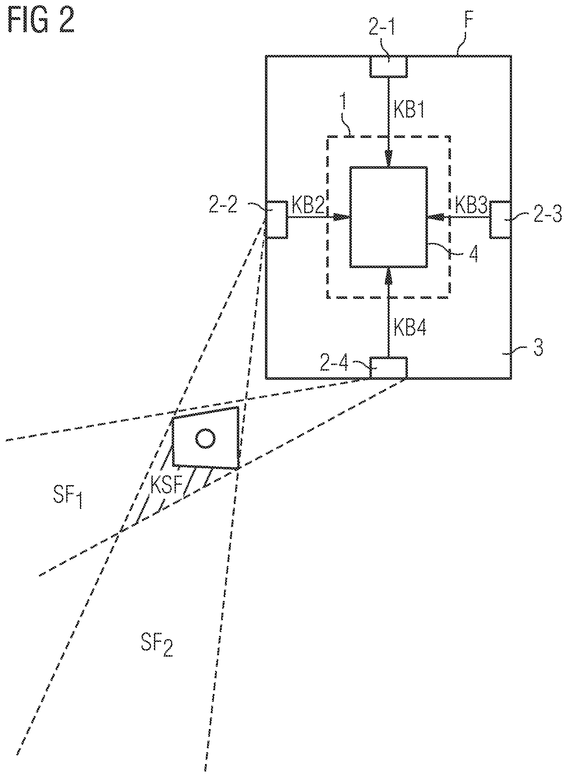

Figur 2 zeigt schematisch die Funktionsweise eines erfindungsgemäßen Verfahrens und einer erfindungsgemäßen Vorrichtung zum Erzeugen einer Fahrzeugumgebungsansicht bei einem Fahrzeug.

Bei dem in Figur 2 dargestellten Fahrzeug F handelt es sich beispielsweise um ein Straßenfahrzeug, welches ein Fahrerassistenzsystem FAS besitzt. Dieses Fahrerassistenzsystem FAS enthält ein Surround-View-System bzw. ein System zur Darstellung der Fahrzeugumgebung des Fahrzeuges F, das Kamerabilddaten von Fahrzeugkameras auswertet. Bei dem in Figur 2 dargestellten Ausführungsbeispiel sind an verschiedenen Seiten einer Fahrzeugkarosserie 3 des Fahrzeuges F verschiedene Fahrzeugkameras 2-i vorgesehen. Diese Fahrzeugkameras 2-i liefern kontinuierlich Bilddaten bzw. Kamerabilder, welche über Signalleitungen an eine Bilddatenverarbeitungseinheit 4 der Vorrichtung zum Erzeugen einer Fahrzeugumgebungsansicht FUA übermittelt bzw. übertragen werden. Die Bilddatenverarbeitungseinheit 4 kann die empfangenen Bilddaten bzw. Kamerabilder vorzugsweise in Echtzeit verarbeiten und erzeugt eine Fahrzeugumgebungsansicht des Fahrzeuges F. Die verschiedenen Fahrzeugkameras 2-i liefern kontinuierlich Kamerabilder KB bzw. Bilddaten an die Bilddatenverarbeitungseinheit 4 zur Bilddatenauswertung. Bei den Fahrzeugkameras 2-i kann es sich beispielsweise um Fischaugenkameras handeln, die Bilddaten übertragen.

Bei dem in Figur 2 dargestellten Beispiel befindet sich an der hinteren linken Rückseite neben der Fahrzeugkarosserie 3 des Fahrzeuges F ein Objekt bzw. Hindernis O. Der Bereich, in dem sich das Objekt O befindet, wird bei dem dargestellten Beispiel durch die an der linken Seite der Fahrzeugkarosserie 3 angebrachte Fahrzeugkamera 2-2 und durch die an der Rückseite der Fahrzeugkarosserie 3 angebrachte Fahrzeugkamera 2-4 erfasst. Die von den beiden Kameras 2-2, 2-4 erfassten Bereiche können sich überlappen, insbesondere wenn es sich bei den Kameras um Fischaugenkameras handelt. Bei dem in Figur 2 dargestellten Beispiel führt das Vorhandensein des Hindernisses bzw. Objektes O zu zwei Schattenflächen, nämlich zu einer ersten Schattenfläche SF1 für die an der Rückseite angebrachte Fahrzeugkamera 2-4, und zu einer zweiten Schattenfläche SF2 für die an der linken Seite der Fahrzeugkarosserie 3 angebrachte Fahrzeugkamera 2-2. Die in Figur 2 schraffiert dargestellte Fläche ist eine Kernschattenfläche KSF, welche weder durch die Fahrzeugkamera 2-2 noch durch die Fahrzeugkamera 2-4 erfasst wird. Bei dem in Figur 2 dargestellten Objekt bzw. Hindernis O kann es sich beispielsweise um einen Pfosten oder ein sonstiges Hindernis handeln. Die Fahrzeugkameras 2-2, 2-4 liefern kontinuierlich Kamerabilder KB2, KB4 an die Bilddatenverarbeitungseinheit **4.** Die Bilddatenverarbeitungseinheit 4 erkennt Bildbereiche der Fahrzeugumgebung, die aus Sicht von Fahrzeugkameras durch ein in der Fahrzeugumgebung befindliches Objekt O verdeckt werden. Bei dem in Figur 2 dargestellten Beispiel erkennt die Bilddatenverarbeitungseinheit 4 die beiden Schattenflächen SF1, SF2 in den erhaltenen Bilddaten. Die Bilddatenverarbeitungseinheit 4 ersetzt Bildanteile des von dem Objekt O verdeckten Bildbereichs, die für mindestens eine andere Fahrzeugkamera 2 sichtbar sind, durch Bilddaten, welche von der anderen Fahrzeugkamera 2 geliefert werden. Beispielsweise werden die Bildanteile der von der hinteren Fahrzeugkamera 2-4 gelieferten Bilddaten bzw. Kamerabilder KB der vom Objekt O verdeckten Schattenfläche SF1, die jedoch für die linke Fahrzeugkamera 2-2 sichtbar sind, durch Bilddaten ersetzt, welche von der linken Fahrzeugkamera 2-2 geliefert werden. Weiterhin werden bei dem dargestellten Beispiel Bildanteile der von dem Objekt O verdeckten Schattenfläche SF2, die jedoch für die hintere Fahrzeugkamera 2-4 sichtbar sind, durch Bilddaten ersetzt, welche von der Fahrzeugkamera 2-4 stammen.

Die in Figur 2 gestrichelt dargestellte Kernschattenfläche KSF wird weder von der linken Fahrzeugkamera 2-2 noch von der hinteren Fahrzeugkamera 2-4 erfasst. Die Bilddatenverarbeitungseinheit 4 ersetzt Bildanteile des von dem Objekt O verdeckten Bildbereichs, die für keine der Fahrzeugkameras 2 sichtbar sind, durch extrapolierte Bilddaten. Dabei werden die Bilddaten auf Basis von Bilddaten in der Objektumgebung des Objektes O extrapoliert, welche von Fahrzeugkameras 2 geliefert werden. Die Objektumgebung bezeichnet einen vorgegebenen räumlichen Bereich um das Hindernis bzw. Objekt O herum, nämlich einen Bereich mit einem bestimmten Radius um das Objekt O herum. Die Extrapolation der Bilddaten, die zur Ersetzung von Bildanteilen in der Kernschattenfläche KSF verwendet werden, erfolgt vorzugsweise durch örtliche, zeitliche und/oder frequenzselektive Extrapolation auf Basis von Bilddaten in der Objektumgebung, welche von Fahrzeugkameras 2 an die Bilddatenverarbeitungseinheit 4 geliefert werden. Bei der erfindungsgemäßen Vorrichtung 1 wird eine Projektionsfläche, insbesondere eine 3D-Projektionsfläche zur Projektion der erzeugten Fahrzeugumgebungsansicht FUA in Abhängigkeit von dem durch das Objekt bzw. Hindernis verdeckten Bildbereich adaptiv angepasst.

Ein spezifisches Datenmodell eines adaptiven 3D-Surround-View-Systems umfasst eine 3D-schüsselförmige Projektionsfläche. Das Vorhandensein eines Objektes bzw. Hindernisses O in der Fahrzeugumgebung kann zu einer Verzerrung bzw. Deformation der Projektionsfläche führen. Die Deformation der Projektionsfläche kann dazu führen, dass ein Objekt einen Bereich verschattet bzw. abdeckt, der durch ein deformiertes Gitter dargestellt wird, **d.h.** die physikalisch vorhandene Fahrzeugkamera ist nicht in der Lage, den Bildinhalt dieses Teils der schüsselförmigen Projektionsfläche zu erfassen. Bei dem erfindungsgemäßen Verfahren wird die 3D-Projektionsfläche in Abhängigkeit der durch das Objekt O verdeckten Bildbereiche adaptiv angepasst. Die erzeugte Fahrzeugumgebungsansicht FUA, welche durch die Bilddatenverarbeitungseinheit 4 berechnet wird, wird bei einer möglichen Ausführungsform in einen Datenspeicher zur weiteren Datenauswertung zwischengespeichert. Die Fahrzeugumgebungsansicht FUA wird bei einer möglichen Ausführungsform durch weitere Funktionseinheiten des Fahrerassistenzsystems ausgewertet, um Fahrerassistenzsystemfunktionen für den Fahrer des Fahrzeuges F bereitzustellen. Die höhere Qualität der durch die Datenverarbeitungseinheit 4 bereitgestellten Fahrzeugumgebungsansicht FUA erhöht auch die Qualität der davon abgeleiteten Fahrerassistenzsystemfunktionen.

Die erfindungsgemäße Vorrichtung 1 zur Erzeugung einer Fahrzeugumgebungsansicht kann bei verschiedenartigen Fahrzeugen eingesetzt werden. Bei den Fahrzeugen kann es sich beispielsweise um Landfahrzeuge, insbesondere Straßenfahrzeuge, beispielsweise Pkw oder Lkw, aber auch um Landfahrzeuge, die in der Agrarwirtschaft eingesetzt werden, handeln. Weiterhin kann es sich bei dem Fahrzeug F um ein Wasserfahrzeug oder ein Luftfahrzeug handeln, das sich beispielsweise nach dem Landen auf einer Bodenfläche innerhalb des Flugplatzes bewegt. Das erfindungsgemäße Verfahren kann verwendet werden, während sich das Fahrzeug F über eine Bodenfläche bewegt oder wenn das Fahrzeug F auf einer Bodenfläche fest steht.

### BEZUGSZEICHEN

1. Vorrichtung
2. Fahrzeugkamera
3. Fahrzeugkarosserie
4. Bilddatenverarbeitungseinheit

## Patentansprüche

1. Verfahren zum Erzeugen einer Fahrzeugumgebungsansicht, FUA, bei einem Fahrzeug (F) mit den folgenden Schritten:
(a) Liefern (S1) von Bilddaten einer Fahrzeugumgebung des Fahrzeuges (F) durch Fahrzeugkameras (2), die an einer Fahrzeugkarosserie (3) des Fahrzeuges (F) vorgesehen sind;
(b) Erkennen (S2) von Bildbereichen der Fahrzeugumgebung, die aus Sicht von Fahrzeugkameras (2) durch ein in der Fahrzeugumgebung befindliches Objekt (O) verdeckt werden;
(c) Ersetzen (S3) von Bildanteilen eines von dem Objekt (O) verdeckten Bildbereichs (SF) in den Bilddaten einer der Fahrzeugkameras (2), die für mindestens eine andere der Fahrzeugkameras (2) sichtbar sind, durch Bilddaten, welche von der mindestens einen anderen Fahrzeugkamera (2) geliefert werden;
**dadurch gekennzeichnet, dass** das Verfahren weiterhin den folgenden Schritt umfasst:
(d) Ersetzen (S4) von Bildanteilen des von dem Objekt (O) verdeckten Bildbereichs (KSF), die für keine der anderen Fahrzeugkameras (2) sichtbar sind, durch extrapolierte Bilddaten, wobei die extrapolierten Bilddaten auf Basis von Bilddaten einer Objektumgebung um das Objekt (O) herum, welche von mindestens einer der anderen Fahrzeugkameras (2) geliefert werden, extrapoliert werden, wobei diese Objektumgebung ein vorgegebener räumlicher Bereich mit einem bestimmten Radius um das Objekt (O) herum ist; und dass
eine 3D-Projektionsfläche zur Projektion der Fahrzeugumgebungsansicht, FUA, in Abhängigkeit von dem durch das Objekt (O) verdeckten Bildbereich adaptiv angepasst wird.

2. Verfahren nach Anspruch 1,
wobei die extrapolierten Bilddaten durch örtliche, zeitliche und/oder frequenzselektive Extrapolation auf Basis von Bilddaten berechnet werden, welche von den anderen Fahrzeugkameras (2) geliefert werden.

3. Verfahren nach einem der vorangehenden Ansprüche 1 und 2, wobei die Fahrzeugumgebungsansicht, FUA, durch eine Berechnungseinheit (4) in Echtzeit berechnet wird, die Bilddaten von den Fahrzeugkameras (2) des Fahrzeuges (F) erhält.

4. Vorrichtung zur Erzeugung einer Fahrzeugumgebungsansicht, FUA, bei einem Fahrzeug (F) mit:
Fahrzeugkameras (2), die an einer Fahrzeugkarosserie (3) des Fahrzeuges (F) vorgesehen sind und Bilddaten einer Fahrzeugumgebung des Fahrzeuges (F) liefern;
einer Bilddatenverarbeitungseinheit (4), die Bildbereiche der Fahrzeugumgebung, die aus Sicht von Fahrzeugkameras (2) durch ein in der Fahrzeugumgebung befindliches Objekt (O) verdeckt werden, erkennt,
wobei die Bilddatenverarbeitungseinheit (4) automatisch Bildanteile eines von dem Objekt verdeckten Bildbereichs in den Bilddaten einer der Fahrzeugkameras (2), die für mindestens eine andere der Fahrzeugkameras (2) sichtbar sind, durch Bilddaten ersetzt, welche von der mindestens einen anderen Fahrzeugkamera (2) geliefert werden,
**dadurch gekennzeichnet,**
**dass** die Bilddatenverarbeitungseinheit (4) Bildanteile des von dem Objekt verdeckten Bildbereichs, die für keine der Fahrzeugkameras (2) sichtbar sind, durch extrapolierte Bilddaten ersetzt, wobei die extrapolierten Bilddaten auf Basis von Bilddaten einer Objektumgebung, welche von wenigstens einer der anderen Fahrzeugkameras (2) geliefert werden, extrapoliert werden, wobei diese Objektumgebung ein vorgegebener räumlicher Bereich mit einem bestimmten Radius um das Objekt (O) herum ist, und wobei die Bilddatenverarbeitungseinheit (4) eine 3D-Projektionsfläche zur Projektion der Fahrzeugumgebungsansicht, FUA, in Abhängigkeit von dem durch das Objekt verdeckten Bildbereich adaptiv anpasst.

5. Vorrichtung nach Anspruch 4,
wobei die Bilddatenverarbeitungseinheit (4) die extrapolierten Bilddaten durch örtliche, zeitliche und/oder frequenzselektive Extrapolation auf Basis von Bilddaten berechnet, welche von den anderen Fahrzeugkameras geliefert werden.

6. Vorrichtung nach einem der vorangehenden Ansprüche 4 und 5,
wobei die Fahrzeugumgebungsansicht, FUA, durch die Bilddatenverarbeitungseinheit (4) auf Basis von Bilddaten in Echtzeit berechnet wird, die von den Fahrzeugkameras (2) des Fahrzeuges (F) an die Bilddatenverarbeitungseinheit (4) übertragen werden.

7. Fahrerassistenzsystem mit Vorrichtung zur Erzeugung einer Fahrzeugumgebungsansicht nach einem der vorangehenden Ansprüche 4 bis 6.

8. Fahrzeug mit einem Fahrerassistenzsystem nach Anspruch 7.

## Claims

1. A method for generating a vehicle surroundings view, VSV, in a vehicle (F), comprising the following steps:
(a) supplying (S1) image data of the vehicle surroundings of the vehicle (F) by way of vehicle cameras (2) that are provided on a vehicle body (3) of the vehicle (F);
(b) recognizing (S2) image areas of the vehicle surroundings that are concealed from the point of view of vehicle cameras (2) by an object (O) located in the vehicle surroundings;
(c) replacing (S3) image components of an image area (SF) concealed by the object (O) in the image data of one of the vehicle cameras (2) that are visible to at least one of the other vehicle cameras (2) with image data which are supplied by the at least one other vehicle camera (2);
**characterized in that** the method furthermore comprises the following step:
(d) replacing (S4) image components of the image area (KSF) concealed by the object (O) that are not visible to any of the other vehicle cameras (2) with extrapolated image data, wherein the extrapolated image data are extrapolated on the basis of image data of the object surroundings around the object (O) that are supplied by at least one of the other vehicle cameras (2), wherein these object surroundings are a predefined spatial area having a defined radius around the object (0); and **in that**
a 3D projection surface for the projection of the vehicle surroundings view, VSV, is adaptively adjusted depending on the image area concealed by the object (O).

2. The method as claimed in claim 1,
wherein the extrapolated image data are calculated by local, temporal, and/or frequency-selective extrapolation on the basis of image data that are supplied by the other vehicle cameras (2).

3. The method as claimed in either one of preceding claims 1 and 2, wherein the vehicle surroundings view, VSV, is calculated in real time by a calculation unit (4) that receives image data from the vehicle cameras (2) of the vehicle (F).

4. A device for generating a vehicle surroundings view, VSV, in a vehicle (F) having:
vehicle cameras (2) that are provided on a vehicle body (3) of the vehicle (F) and supply image data of the vehicle surroundings of the vehicle (F);
an image data processing unit (4) that recognizes image areas of the vehicle surroundings that, from the point of view of vehicle cameras (2), are concealed by an object (O) located in the vehicle surroundings,
wherein the image data processing unit (4) automatically replaces image components of an image area concealed by the object in the image data of one of the vehicle cameras (2) that are visible to at least one other of the vehicle cameras (2) with image data that are supplied by the at least one other vehicle camera (2), **characterized in that**,
the image data processing unit (4) replaces image components of the image area concealed by the object that are not visible to any of the vehicle cameras (2) with extrapolated image data, wherein the extrapolated image data are extrapolated on the basis of image data of the object surroundings supplied by at least one of the other vehicle cameras (2), wherein these object surroundings are a predefined spatial area having a defined radius around the object (0), and wherein the image data processing unit (4) adaptively adjusts a 3D projection surface for projecting the vehicle surroundings view, VSV, depending on the image area concealed by the object.

5. The device as claimed in claim 4,
wherein the image data processing unit (4) calculates the extrapolated image data by local, temporal, and/or frequency-selective extrapolation on the basis of image data that are supplied by the other vehicle cameras.

6. The device as claimed in either one of preceding claims 4 and 5,
wherein the vehicle surroundings view, VSV, is calculated by the image data processing unit (4) in real time on the basis of image data which are transmitted from the vehicle cameras (2) of the vehicle (F) to the image data processing unit (4).

7. A driver assistance system having a device for the generation of a vehicle surroundings view as claimed in any one of preceding claims 4 to 6.

8. A vehicle having a driver assistance system as claimed in claim 7.

## Revendications

1. Procédé pour créer une vue de l'environnement d'un véhicule (FUA) pour un véhicule (F) comprenant les étapes suivantes :
(a) la fourniture (S1) de données d'image de l'environnement d'un véhicule (F) au moyen de caméras de véhicule (2) fournies sur la carrosserie de véhicule (3) du véhicule (F) ;
(b) la détection (S2) des zones d'image de l'environnement d'un véhicule qui, du point de vue des caméras de véhicule (2), sont obscurcies par un objet (O) situé dans l'environnement d'un véhicule ;
(c) le remplacement (S3) des portions d'image d'une zone d'image (SF) obscurcie par l'objet (O) dans les données d'image de l'une des caméras de véhicule (2), qui sont visibles par au moins une autre des caméras de véhicule (2), par des données d'image fournies par au moins une autre caméra de véhicule (2) ;
**caractérisé en ce que** le procédé comprend également l'étape suivante :
(d) le remplacement (S4) de portions d'image de la zone d'image (KSF) masquées par l'objet (O) et non visibles par les autres caméras de véhicule (2) par des données d'image extrapolées, dans lequel les données d'image extrapolées sont extrapolées sur la base de données d'image d'un environnement d'objet autour de l'objet (O), qui sont fournies par au moins l'une des autres caméras de véhicule (2), dans lequel ledit environnement d'objet est une zone spatiale prédéfinie avec un rayon spécifique autour de l'objet (O) ; et **en ce que**
une surface de projection 3D pour la projection de la vue de l'environnement d'un véhicule, FUA, est ajustée de manière adaptative en fonction de la zone d'image obscurcie par l'objet (O).

2. Procédé selon la revendication 1,
dans lequel les données d'image extrapolées sont calculées par extrapolation spatiale, temporelle et/ou sélective en fréquence sur la base de données d'image fournies par les autres caméras de véhicule (2).

3. Procédé selon l'une des revendications 1 et 2 précédentes, dans lequel la vue de l'environnement d'un véhicule, FUA, est calculée en temps réel par une unité de calcul (4) qui reçoit des données d'image des caméras de véhicule (2) du véhicule (F).

4. Dispositif de génération d'une vue de l'environnement d'un véhicule (FUA) pour un véhicule (F) avec :
des caméras de véhicule (2) qui sont disposées sur la carrosserie de véhicule (3) du véhicule (F) et qui fournissent des données d'image d'un environnement de véhicule du véhicule (F) ;
une unité de traitement de données d'image (4) qui détecte les zones d'image de l'environnement d'un véhicule qui, du point de vue des caméras de véhicule (2), sont obscurcies par un objet (O) situé dans l'environnement d'un véhicule,
dans lequel l'unité de traitement de données d'image (4) remplace automatiquement les portions d'image d'une zone d'image masquée par l'objet dans les données d'image de l'une des caméras de véhicule (2), visibles par au moins une autre des caméras de véhicule (2), par des données d'image fournies par l'au moins une autre caméra de véhicule (2), **caractérisé en ce que**,
l'unité de traitement de données d'image (4) remplace les portions d'image de la zone d'image masquée par l'objet, qui ne sont visibles par aucune des caméras de véhicule (2), par des données d'image extrapolées, dans lequel les données d'image extrapolées sont extrapolées sur la base de données d'image d'un environnement d'objet fournies par au moins l'une des autres caméras de véhicule (2), dans lequel ledit environnement d'objet est une zone spatiale prédéfinie avec un rayon spécifique autour de l'objet (O), et dans lequel l'unité de traitement de données d'image (4) ajuste de manière adaptative une surface de projection 3D pour projeter la vue de l'environnement d'un véhicule, FUA, en fonction de la zone d'image obscurcie par l'objet.

5. Dispositif selon la revendication 4,
dans lequel l'unité de traitement de données d'image (4) calcule les données d'image extrapolées par extrapolation spatiale, temporelle et/ou sélective en fréquence sur la base des données d'image fournies par les autres caméras de véhicule.

6. Dispositif selon l'une des revendications 4 et 5 précédentes,
dans lequel la vue de l'environnement d'un véhicule, FUA, est calculée par l'unité de traitement de données d'image (4) sur la base de données d'image transmises en temps réel par les caméras de véhicule (2) du véhicule (F) à l'unité de traitement de données d'image (4).

7. Système d'assistance au conducteur avec dispositif de génération d'une vue de l'environnement d'un véhicule selon l'une des revendications précédentes 4 à 6.

8. Véhicule doté d'un système d'assistance au conducteur selon la revendication 7.
